# EUROPEAN PATENT SPECIFICATION

(11) **EP 2 587 915 B1**
(45) Date of publication and mention of the grant of the patent: **14.01.2015**
(21) Application number: 11772306.4
(22) Date of filing: 19.04.2011
(51) Int. Cl.: A01K 61/00

(54) **FISH FARM CONSTRUCTION AND METHOD FOR WATER FLOW IN A FISH FARM CONSTRUCTION**
FISCHZUCHTFARM UND WASSERFLUSSVERFAHREN FÜR EINE FISCHZUCHTFARM
CONSTRUCTION DE PISCICULTURE ET PROCÉDÉ POUR L'ÉCOULEMENT D'EAU DANS UNE CONSTRUCTION DE PISCICULTURE

(30) Priority: 22.04.2010 NO 20100604; 27.12.2010 NO 20101803; 15.02.2011 NO 20110254
(43) Date of publication of application: 08.05.2013
(73) Proprietor: Ecomerden A/S, 6924 Hardbakke (NO)
(72) Inventor: KYRKJEBØ, Martin, N-1800 Askim (NO)
(74) Representative: Acapo AS
(86) International application number: PCT/NO2011/000133
(87) International publication number: WO 2011/133045

(56) References cited:
- WO-A1-2006/021010
- NO-B- 160 753
- NO-B- 175 341
- NO-B- 178 811
- US-A- 3 698 359
- US-A- 4 231 873
- US-A- 4 798 168
- US-A- 4 972 801
- US-A- 5 660 141
- US-A- 5 762 024
- DATABASE WPI Week 198336, Derwent Publications Ltd., London, GB; AN 1983-756938, XP003031806 & SU 969 217 A1 (INST BIOLOG YUZHN MOREJ IM A O) 05 November 1982

## Description

The present invention relates to a fish farm construction for farming of fish, comprising a closed net cage fastened to a floating collar which is, at least, partially submersed in the water, and also, at least, one inlet pipe for the supply of fresh water where the water is supplied to the net cage with the help of one or more water distributors and an outlet in a lower part of the bottom section of the net cage for outflow of water and waste from the net cage via an outflow pipe. The invention also relates to a method for through-flow of water in a fish farm construction for farming of fish.

Today, there is a considerable problem related to spreading of disease and lice in addition to the discharge of pollution in the fish farming industry. The waste from the fish farm installations releases feed residues and faeces from the fish directly into the sea and the surrounding environment and causes pollution. At the same time, there is a market for utilisation of the released materials in the production of fertilisers.

Lice represent a risk for wild salmon. In the delousing process, delousing agents are also released directly into the sea. This also represents a threat to the environment. Another important threat to wild salmon and the spreading of disease is the escape of farmed fish. These negative aspects of the industry have placed the fish farming industry in a negative light. This leads to a need for closed and safer fish farm installations.

Today, one has land-based installations that have failed, partly because of investment costs, energy costs and partly because of the need for large areas. At sea, farming in closed pipes has been launched, something which requires complicated tendering and feeding and also an unrealistic number of pipes and pipes that are kilometres long along the fjords to use the concessions to operate to a maximum.

Previously, commercial fish farming installations have been constructed with closed tarpaulin bags with an outlet in the bottom, and which are suspended in fixed floating collars comprising hinged steel platforms with buoyancy pontoons in polyethylene and filled with polystyrene. With such installations valuable experiences were gained related to biology with respect to growth, and the density of the fish with regard to volume. However, there were problems with frequent breakdowns because of ripping of the bags.

A geodetic height is required inside the net where the fish is in relation to the surface of the seawater and because this amount of water shall be carried by the pontoons of the fish farm installation, this height difference limits the size of the net cages and thus the amount of fish that is produced. In addition, the through-flow in the centre outlet was very limited and thereby a large consumption of supplied oxygen to the bags.

There is also a problem that the fish farms are susceptible to waves, currents and movements in the sea. This causes jerks in the tarpaulin bags with wear and limited life-time of the bags as these are too rigid to be suspended. With tears in the closing seine there is, of course, a great risk of the fish escaping. The size of the net cages is also very limited with this solution.

In some countries that operate fish farms, there are great problems with attacks from predators such as, for example, seals and sea lions. Thus it is necessary in Chile, for example, to have closing seines surrounding the whole of the fish farm installation. This is, of course, an extra cost, but also there will be much additional maintenance partly because of holes in the nets caused by the predators, partly because of growth on the nets.

The predators will attack regardless, or find solutions to attack the fish as long as they can see them inside the fish farms.

With the present invention one aims to solve such problems of lice, danger of infection, predators and escapes in a more effective, safe and controlled way.

A device and a method for supply of water to a closed net cage is known from NO175341 B where the water is brought up from water depths that are greater than the depth of the water in the net cage. The water is pumped up from the depth to a single water distributor placed at the inlet, where the water is distributed, in the main, tangentially to the net cage so that a rotating movement is arranged in the mass of water in the net cage. The net cage further comprises an open outlet for freely flowing water in the bottom section.

NO160753 B shows a method and a device for mainly cleaning of a bottom area of a closed net cage, where, among other things, a secondary flow of water is arranged in the net cage. Furthermore, an inlet is described connected to a vertically placed nozzle device.

NO159512 B relates to a device for controlled flow in a closed net cage with an upper fresh water inlet and a lower water outlet.

NO178811 B shows a collecting system for a closed net cage, in which dead fish and other polluting material are collected in a lower outlet to be subsequently transported via an outlet hose to an outflow and away from the net cage with the help of an ejector.

WO 99/34668 describes a submersible floating collar with a closing seine where the floating collar comprises one or more buoyancy rings with valves for control of intake and outlet of water and air, and thus the buoyancy of the floating collar.

In the described document, and in particular in NO175341 B which is regarded to be closest prior art, there are no descriptions of several water distributors placed at the circumference of the floating collar or associated water distribution channel or pipe connected to a water reservoir, and in which the level of water in the water channel can be regulated. Nor is there any description of how an equilibrium can be reached in the floating collar, which, according to the present invention, can be achieved by, among other things, the floating collar having an inlet platform with water storage which is corresponding to an outlet platform, which is opposite, with a sludge tank.

US 4,798,168 discloses a fish farm contruction and a method for farming of fish according to the preamble of claims 1 and 11 respectively.

Consequently, it is an object of the present invention to provide an improved fish farm construction, where at least some of the disadvantages mentioned above are avoided.

Furthermore, the present fish farm construction can be made to be rigid and with a double wall where the inner wall constitutes a wall that makes it possible to tend fish, and the outer wall is, for example, a tarpaulin to prevent lice and collect faecal material and feed waste at the same time as the fish farm construction will reduce the risk of fish escaping.

The above mentioned objects are obtained with a fish farm construction as defined in the independent claim 1, in that the floating collar is shaped as a rigid construction, where the closed net cage comprises, at least, two separate walls and the floating collar comprises, at least, one water reservoir connected to said, at least, one inlet pipe to receive and distribute water, and also a number of water distributors arranged mutually spaced apart around the floating collar and which are arranged to receive and distribute water in the net cage.

Preferred embodiments are given in the dependent claims.

At least one water channel can be connected to the water reservoir and extend completely, or partially, around the floating collar, as the water channel is arranged to receive the water and to distribute the water to respective water distributors placed on the floating collar.

Said water channel can be equipped with a number of splashing bulkheads. A controlled water flow can thereby be provided. Furthermore, the channel can serve to stiffen the fish farm construction and also as ballast to force the whole fish farm down into the sea, in parallel with the surface of the water.

Alternatively, a water channel or water pipe can extend from the water reservoir and to each water distributor. Furthermore, the floating collar can comprise a number of water reservoirs in the form of tanks, or chambers, arranged mutually spaced apart around the floating collar, where each tank is arranged to receive water and transfer the water to one or more water distributors.

Alternatively, or in addition, the floating collar can comprise a number of water reservoirs in the form of tanks or chambers arranged mutually spaced apart around the floating collar, where each tank is arranged to regulate its own water level to ballast the floating collar.

Each tank can comprise a pump for the supply of water to said water distributors and/or for the regulation of the water level in the tank.

Furthermore, the floating collar can comprise an inlet platform, where a water reservoir is arranged in the inlet platform and the floating collar can comprise a diagonally facing outlet platform connected to the outlet pipe and which is equipped with a sludge tank to receive the polluting materials from the fish farm.

For the regulation of the water level in the net cage, the water level in the water reservoir can be higher than the outlet of the water distributors and the outlet of the water distributors can be higher than the surface of the water in the net cage.

The inlet platform preferably comprises a pump and an overflow valve in the water reservoir, in which the overflow valve is arranged to regulate the water level in the water reservoir and the water channel.

The outflow platform preferably comprises a level valve to regulate the water level in the net cage. Furthermore, the water level in the sludge tank is further preferably arranged to be held below the surface of the water in the net cage.

The water distributor can be formed as, or comprise, a rotary pipe bend where the outlet of the pipe bend is above or below the surface of the water in the net cage.

The floating collar is preferably formed as a rigid and unsinkable construction and contains a number of closed and divided chambers arranged mutually spaced apart around the whole of the net cage construction.

The double wall of the net cage can comprise an internal closing seine and an external wall such as a tarpaulin.

In a variant of the invention an upper part of the tarpaulin can encompass the floating collar, as said upper part is folded and arranged to provide buoyancy.

The internal closing seine and the external tarpaulin in the bottom section of the net cage can have different cone forms so that a space is formed between them, and a pipe for the supply of oxygen or air can end up in said space. The supply line for oxygen or air can be connected to openings or slits on the inside of the tarpaulin, where channels for the supply of the oxygen to said openings are distributed in the tarpaulin in the area of the space.

Furthermore, the outlet can comprise an outlet bend equipped with at least two outlets, with one outlet being connected to the outflow pipe and a second outlet being connected to a second outflow pipe for the exit of feed residues and faeces. The second outflow pipe can extend up to the outflow platform.

In a further variant the water reservoir in the inlet platform can be arranged to function as a water ballast reservoir for the ballasting of the floating collar.

It is also an object to provide a method for improved through-flow of water in a fish farm construction, which is achieved with a method where the fish farm construction for the farming of fish comprises a closed net cage fastened to a floating collar which is, at least, partly submersed in the water, and also an inlet for supply of fresh water to the net cage via, at least, one inlet pipe and an outlet from a lower part of the bottom section of the net cage for free removal of water and polluting matter from the net cage via an outflow pipe. The method is characterised in that fresh water is received in the floating collar from, at least, one water reservoir connected to said, at least, one inlet pipe and distributed to one or more water distributors placed on the floating collar, as the water level in said water reservoir is held higher than the water level in the net cage, and that the floating collar comprises a tank connected to the outlet via the outflow pipe, where the water level in the tank is held to be lower than the water level in the net cage, whereby the through-flow of water in the net cage is regulated by regulating the respective water levels in the water reservoir and the tank.

The water level in the water reservoir and the tank can be regulated with the help of respective valves. Furthermore, the water level in said water reservoir is preferably held higher than the outlets of the water distributors and the outlets of the water distributors are placed to be higher than the surface of the water in the net cage.

The invention shall now be described in more detail with the help of the enclosed figures, in which;
Figure 1 shows a fish farm construction according to the invention seen from above.
Figure 2 shows a section of the horizontal plane of the construction shown in figure 1.
Figure 3 shows a partial side section of the fish farm construction according to the invention.
Figure 4 shows a section of an outflow platform of the fish farm construction.
Figure 5 shows a section of an inlet platform of the fish farm construction.
Figure 6 shows a further embodiment of the fish farm construction shown in figure 3.
Figure 7 shows a further embodiment of the fish farm construction shown in figure 4.
Figure 8 shows a further embodiment of the fish farm construction shown in figure 4.
Figure 9 shows a further embodiment of the fish farm construction shown in figures 3 and 6.
Figure 10 shows a further variant of the fish farm construction according to the invention.

As the figures show the present fish farm construction comprises a floating collar 10 that floats at least partially submersed in the water. The floating collar 10 can be anchored with standard known anchorage lines 70. Furthermore, the floating collar 10 can comprise a number of closed, or partially closed, chambers in an upper part, where the chambers can, among other things, ensure sufficient buoyancy and ballasting of the floating collar and where they can also function for the collection and deposition of waste and other things, and also for equipment for the operation of the installation.

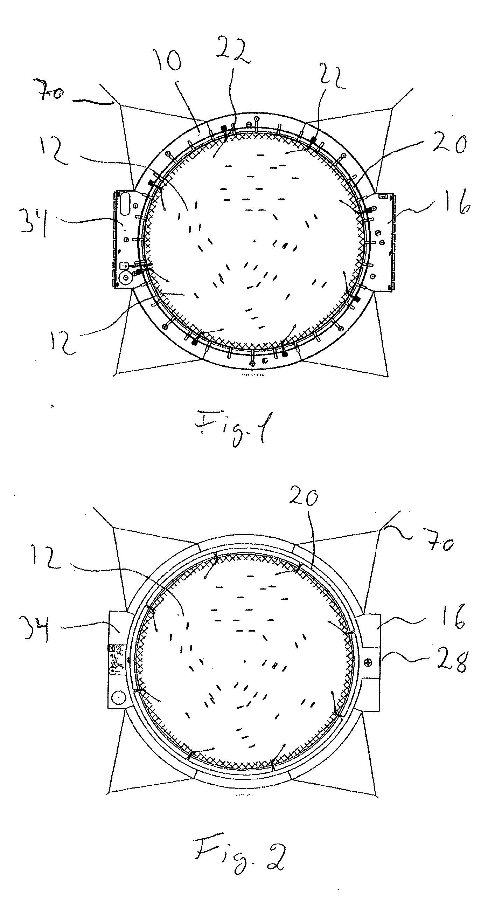

In one embodiment of the present fish farm construction, for example, as shown in figures 1 and 2, the floating collar 10 comprises an internally suspended net cage 12 in the form of, for example, a closing seine 40 for the storage of, and farming of, preferably farmed fish. Furthermore, the floating collar 10 can be equipped with an inlet platform 16 at one side of the floating collar and an outflow platform 34 on the opposite side of the floating collar. The inlet platform and the outflow platform can be sufficiently large so that a vessel can dock alongside and are appropriately placed opposite each other for ballasting purposes. However, it is possible to place the inlet platform and the outflow platform in a different way than that shown in the figures. Furthermore, the floating collar 10 is shown with a circular shape as this provides the best stability. However, the floating collar can have any appropriate shape.

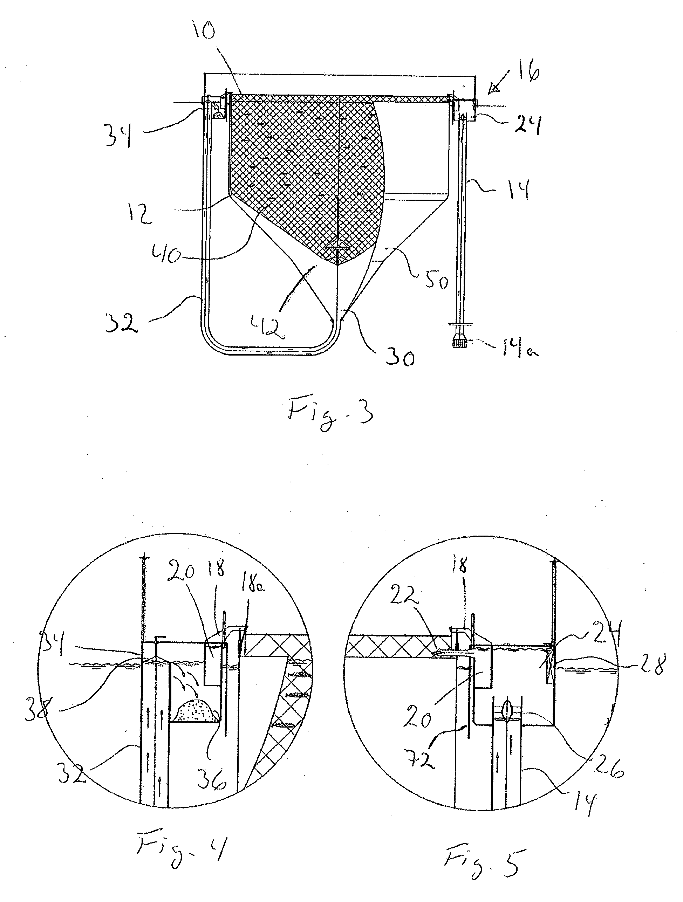

Refer now to figure 3 where an example embodiment of the fish farm construction is shown from the side. An inlet pipe 14 for fresh water runs down into the sea and water is sucked up with the help of a pump 26, placed here in an upper part of the inlet pipe 14, but can also be placed in other locations, for example, at a lower end of the inlet pipe. The inlet pipe 14 can be equipped at the bottom with an inlet filter 14a to prevent ingress of polluting matter and unwanted organisms in the water. The inlet pipe 14 is connected to a water reservoir 24 where the water reservoir in the embodiment shown is placed in the inlet platform 16. However, the water reservoir can be placed in one of the earlier mentioned chambers or other appropriate locations on the floating collar 10. It is an advantage that the inlet pipe extends down to a depth of water that is free from lice, as mature female lice are, in the main, found in the upper water layers only.

Furthermore, the net cage construction comprises a lower outlet 30 through which water can flow freely. Feed residues and faeces that go through the net 12 will normally be led out through the outlet 30 and be brought further through an outflow line 32 and into a sludge tank 36 on the floating collar 10. In the embodiment shown the sludge tank 36 is placed in the outflow platform 34.

The net cage 12 according to the present invention is preferably double walled and comprises, in the embodiment shown, the internal closing seine 40 and an external wall in the form of, for example, a tarpaulin 50. Such a solution ensures the fish are not threatened by predators, other organisms and unwanted polluting matter, and will also prevent fish escaping if the closing seine 40 should rip. A lower bottom section of the net cage is preferably in the form of a cone or downwardly extending, where the tarpaulin 50 extends further down than the closing seine 40 so that a space 42 is formed between the two wall parts. Here, the outlet 30 is placed at the bottom of the tarpaulin 50.

The closing seine 40 can be suspended internally in the floating collar with the help of a number of suspension brackets 18, and also associated springs 18a and struts (not shown). The tarpaulin 50 can be suspended from the same brackets 18 or possibly peripherally on the outside of the floating collar 10, but such that an alternative flexible spring suspension by the tarpaulin bag 50 can be formed.

In smaller installations one can imagine that an internal tank is used, for example, a polyester tank, instead of the described closing seine, and that a safeguard is arranged outside the tank in the form of a closing seine or tarpaulin.

From figure 5 it can be seen that the water reservoir 24 is connected to, at least, one water channel 20 or water pipe that distributes the water to a number of water distributors 22. The water level in the water reservoir 24 is higher than the outlet of the water distributors, where the outlet of the water distributors is in turn higher than the surface of the water in the net cage. As described earlier, the surface of the water in the net cage will be higher than the surrounding seawater. Alternatively, or in addition, the water reservoir in the inlet platform 16 can function as a water ballast reservoir for the ballasting of the floating collar, where the water in the water reservoir is not necessarily water for the net cage.

The water channel 20 provides a controlled flow of water to the net cage and also contributes to support the floating collar and as ballast to force the whole of the net cage evenly down into the sea. By increasing the water level in the water channel this makes the net cage and the floating collar more stable and steady with a low specific frequency so that the net cage will be stable without great and sudden movements and which, in turn, generates a favourable flow situation across the whole net cage. This means that the net cage construction can be placed in exposed farming locations, at the same time as it can also be placed in shielded locations and which means that the fish farm construction according to the invention can be used at all types of locations.

The water channel 20 extends preferably from the water reservoir 24 and, at least, partially around the floating collar 10. In the example shown in figure 2 the water channel 20 extends all the way around the floating collar 10. Furthermore, the water channel 20 can be formed at the top with a mainly open U-shape or with a closed pipe shape. If appropriate, a separate water channel can extend to each water distributor.

As figures 1 and 2 show, the floating collar 10 can be equipped with several water distributors 22 or outlet nozzles placed mutually spaced apart around the net cage 12. As the outlets of the water distributors 22 can be lower than the water level in the water reservoir 24, the water can be distributed in the net cage without further use of pumps or use of energy. However, if appropriate, pumps can be arranged in the water channel. The water is distributed preferentially tangentially in the net cage so that the water mass of the net cage is put into a rotating motion. For this purpose the water distributor 22 or the outlet can consist of, or comprise, a regulating pipe bend secured by, for example, a swivel connection.

Figure 4 shows a section of the outflow platform 34. It can be seen that the sludge tank 36 can be placed in the outflow platform 34. The outflow pipe 32, which runs from the outlet 30 of the bottom section of the net cage 12, ends up in the sludge tank 36 and can comprise a level valve 38 to regulate the liquid level in the sludge tank 36. In this way the through-flow of water and the water level in the closed net cage 12 can be regulated, partly via a level in the water channel 20 and the inlet from the water distributors, the water level in the water reservoir 24 that is regulated by the pump 26 and the valve 38 that regulates the level in the sludge tank 36. The level valve 38 regulates the level of the water in the net cage in that a controlled flow of water to the sludge tank is obtained in that the water in the sludge tank is preferably arranged to be held lower than the surface of the water in the net cage. The sludge tank can be level with the seawater and through-flow can be without resistance.

The water can be cleaned before it is released back into the sea. Briefly, impurities and other matter that are led out through the outlet 30 can be taken out in another way and that the sludge tank 36 in such a case will function as a water tank to control the through-flow of water in the net cage as described previously. Furthermore, the outflow platform can comprise separate outflows for the main water stream and one or more outflows for feed particles and faeces (fish excrement).

The fish can, according to the invention, thereby have optimal conditions for growth and health. Firstly, lice and danger of infection will be reduced and secondly one will be able to have a higher water temperature during the winter and possibly a lower water temperature during the summer with optimal oxygen conditions. In delousing (against, for example, attached sea lice that exist in relatively shallow waters) the through-flow of water can be easily reduced or be stopped for a short period until the delousing has worked, in that the supply of oxygen is increased to compensate for the flow of water during the delousing.

For greater flow at a location, with the corresponding risk of deformation of the closed net cage and thus the farmed fish volume, this can be compensated for and the risk reduced by increasing the water level in the net cage 12, either by regulating the level valve 38 in the sludge tank 36 or by increasing the amount of water and the height in the water reservoir or the tanks with the pump 26. The surface of the water in the water channel 20 can also be regulated, or the outlet bends can be turned downwards.

To prevent large fluctuations in the water flow or the water level in the water channel 20, this can alternatively comprise splashing bulkheads in the form of, for example, a given number of walls that partly cover the breadth of the channel and which form a labyrinth-formed barrier for the water and flow back so that this will in turn continue to provide a constant and controlled flow of water into the net cage. These splashing bulkheads will also be able to contribute to ensure a safe ballasting of the floating collar in the sea. If it should still happen that the water level in the closed net cage varies too much, this can be compensated for via the springs 18a in such a way that these stretch during increasing water levels and thus reduce the risk of ripping and collapsing of the net cage.

To make the operating conditions in the fish farm construction more stable and controlled, the floating collar 10 can be equipped with a whole wall 72 out towards the sea to prevent predators and waves from flowing in over the net cage. This wall 72 can alternatively be a double or triple wall that can also contribute further to prevent fish escaping from the net cage construction. The same, or an additional, skirt can also contribute to dampen the flow at exposed locations with strong currents.

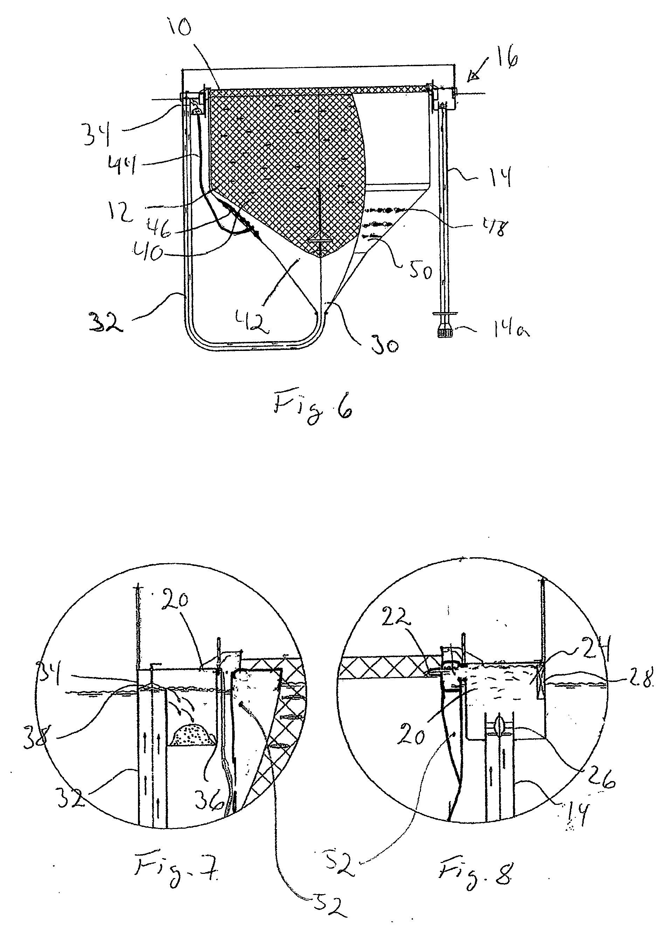

Figure 6 shows a further variant of the fish farm construction according to the invention and which comprises supply of oxygen or air at the bottom section of the net cage. The construction is otherwise similar to the one described previously. An oxygen pipe 44 runs from an area on the floating collar and down to an area in the space 42 for the supply of oxygen or air. A number of openings or slits 46 can be arranged in the conical part of the tarpaulin 50 and contribute to waste in the form of feed residues and faeces being lifted up from the tarpaulin 50 and flowing towards the outlet 30. In this way surface growth and a build-up of waste on the inside of the tarpaulin can be prevented, and also that the through-flow is improved. A number of channels 48 can extend completely or partly around the conical part of the tarpaulin, where said channels 48 are connected to the oxygen pipe 44 and said openings or slits 46. The area with the slits 46 can be shaped into a stepped shape.

Said oxygen pipe 44 can also contribute to the previously mentioned supply of oxygen during the delousing, or when there is a need for extra oxygen supply.

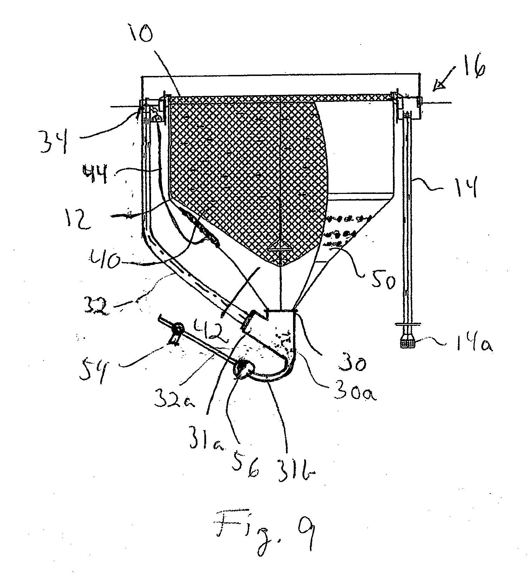

Figure 9 shows a further variant of the net cage construction according to the invention, where an outlet bend 30a is arranged in the outlet 30. In the embodiment shown the outlet bend 30a comprises two outlets 31a 31b, where the first outlet 31a is connected to the previously mentioned outflow pipe 32 and the second outlet 31b is connected to a second outflow pipe 32a. The construction is otherwise similar to the one described previously.

The advantage with the latter solution is that one can, at least partially, separate feed residues and faeces from the stream of water. Feed residues and faeces will sink down in the lower and second outlet 31b of the outlet bend 30a, while water flows out through the first outlet 31a and up to the outflow platform as described previously.

The second outflow pipe 32a can also extend up to the outflow platform 34, but then to another sludge tank or water tank (not shown) and where the level can be regulated as in the way described previously. Furthermore, the second outflow pipe can be equipped with a pump or ejector 56, and also a particle counter 54.

The figures 7 and 8 show an alternative variant of the floating collar. In the first embodiment described above the floating collar is made from a plastic or metallic material. In the embodiment shown in figures 7 and 8 an upper part 52 of the outer tarpaulin 50 can constitute the floating collar. This is realised by the upper part 52 of the tarpaulin 50 being sewn together, or in another way connected, so that a buoyancy chamber is formed in the upper part 52 and which for reasons of stability extends all the way around the net cage. This buoyancy chamber can be filled with air or another material. In a such embodiment the inlet platform and/or the outflow platform can be suspended from the upper part 52. The construction is otherwise similar to the one described previously.

Such a solution will be considerably cheaper, at the same time as optimal stability is ensured and will be particularly suited to smaller installations and in calmer waters.

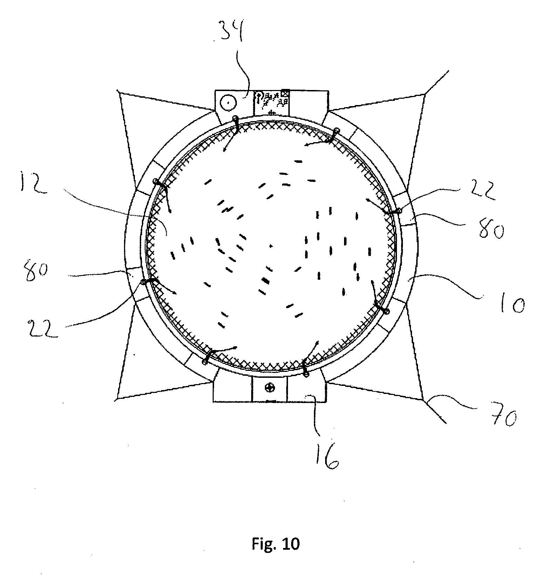

Figure 10 shows a further variant of the present fish farm construction and which can be combined with any of the previously described variants. The solutions shown can comprise a number of tanks 80 which are preferably placed at the circumference and mutually spaced apart around the floating collar 10. Each tank 80 can have several functions and can be arranged to receive water and distribute the water to respective water distributors 22 or outlet nozzles. The tank 80 can be a "dry" room with a pump or ejector that transfers the water to the distributor 22 or it can be a room filled with water that functions as a water reservoir, and where the water in the tank is transported to the distributor 22. Furthermore, the tank 80 can also be arranged to regulate its own water level to ballast the floating collar 10, without the water being necessarily transported further to the distributor 22. For selective control of each tank a pump can be arranged in, or associated with, each tank.

Each tank 80 can, as previously described, receive water from the water channel or pipe 20, or alternatively receive water via its own and separate water pipe, i.e. without the use of the described water channel 20. The water can be received from the water reservoir 24 in the inlet platform, or the tank 80 can be connected to an inlet pipe and which is the same as the previously described inlet pipe or is its own and separate inlet pipe.

For operating reasons it can be an advantage to have more tanks 80 which are each equipped with a pump or an ejector. One will then be less vulnerable if the pump in the water reservoir 24 should be damaged or not work as expected. The floating collar can also be simpler to produce, as it can be built up from modules that are put together. The modules can, for example, be pre-fabricated and be assembled at the location where the fish farm construction is to operate.

With the present invention a complete fish farm construction is thus provided and which can be a self-supplying unit where "all" necessary equipment is integrated into the floating collar and where the floating collar can comprise an inlet platform containing at least one water reservoir, and also a number of outlet nozzles placed mutually spaced apart in and around the floating collar to achieve an even distribution of the fresh water over the whole of the net cage and at the same time arranged an efficient flow that can be regulated in the net cage, as the floating collar can contain several tanks or chambers to receive and distribute the fresh water to the net cage to achieve an even temperature, salinity and oxygen level in the net cage which in turn will ensure an optimal fish welfare.

For the regulation of the through-flow of the water in the net cage, the construction can, as explained, have many different water levels, whereby the through-flow of water in the net cage 12 is regulated by regulating the respective water levels in the water reservoir 24 and the tank 32. With the use of the water channel 20, the water level in the water reservoir 24 will be higher than in the channel and the surface of the water in the net cage will be lower than in the channel but higher than the surrounding seawater. Without the use of the channel 20 the water level in the water reservoir or the water reservoirs is preferably higher than the water level in the net cage, but the use of pumps can regulate this. Furthermore, the water level in the tank 34 is in all cases lower than the water level in the fish tank.

Common to all embodiments is that the fish farm construction can be a self-contained and rigid construction where the floating collar can have everything integrated, i.e. the inlet platform, pumping chambers and outflow platform with level regulation and the sludge tank can be integrated into the floating collar. Double and possibly triple walls against the sea can be used to prevent fish escaping. In this context it can be possible to place an outer skirt around the floating collar that will dampen the current at exposed locations with strong currents. The floating collar can also have a flexible spring suspension from the tarpaulin bag.

The outflow platform can have separate outflows, where one outflow can be for the main water stream and one outflow for feed residues and faeces (fish excrement). Furthermore, control of various processes and also monitoring of fish can be completely controlled over the floating collar level without the need for divers.

Said, at least, one inlet pipe 14 can comprise several inlets or inlet pipes for water positioned with different or mutually similar distances apart around the whole of the floating collar.

## Claims

1. Fish farm construction for farming of fish, comprising a closed net cage (12) fastened to a floating collar (10) which is, at least, partially submersed in the water, and also, at least, one inlet pipe (14) for supply of fresh water, where the water is supplied to the net cage (12) with the help of one or more water distributors, and an outlet (30) in a lower part of the bottom section of the net cage for the outlet of water and waste from the net cage via an outflow pipe (32),**characterised in that**
- the floating collar is formed with a rigid construction, where the closed net cage (12) comprises, at least, two separate walls (40,50), and
- the floating collar (10) comprises, at least, one water reservoir (24;80) connected to said, at least, one inlet pipe (14) to receive water, and also a number of water distributors (22) arranged mutually spaced apart around the floating collar (10) and which are arranged to receive and distribute water in the net cage (12).

2. Fish farm construction according to claim 1,
**characterised in that** at least one water channel (20) is connected to the water reservoir (24) and extends completely or partially around the floating collar (10) as the water channel (20) is arranged to receive the water and distribute the water to respective water distributors (22) placed on the floating collar (10), and that said water channel (20) is equipped with a number of splashing bulkheads, and that the water channel (20) or water pipe extends from the water reservoir (24) and to each water distributor (22) .

3. Fish farm construction according to claim 1,
**characterised in that** the floating collar (10) comprises a number of water reservoirs in the form of tanks (80) or chambers arranged mutually spaced apart around the floating collar (10), where each tank (80) is arranged to receive water and transport the water to one or more water distributors (22), or that the floating collar (10) comprises a number of water reservoirs in the form of tanks (80) or chambers arranged mutually spaced apart around the floating collar (10), where each tank (80) is arranged to regulate its own water level to ballast the floating collar (10); and further **characterised in that** each tank (80) comprises a pump for the supply of water to said water distributor (22) and/or for the regulation of the water level in the tank.

4. Fish farm construction according to claim 1,
**characterised in that** the floating collar (10) comprises an inlet platform (16), where a water reservoir (24) is arranged in the inlet platform (16), and that the floating collar (10) comprises an outflow platform (34) arranged diagonally opposite and connected to the outflow pipe (32) and which is equipped with a sludge tank (36) to receive the impurities from the net cage (12); and
further **characterised in that** the inlet platform (16) comprises a pump (26) and an overflow valve (28) in the water reservoir (24), in which the overflow valve (28) is arranged to regulate the water level in the water reservoir and the water channel (20), and/or that the outflow platform (34) comprises a level valve (38) for the regulation of the surface level of the water in the net cage (12), and that the surface of the water in the sludge tank (36) is arranged to be held lower than the surface of the water in the net cage (12).

5. Fish farm construction according to claim 1,
**characterised in that** the water level in the water reservoir (24) is higher than the outlets of the water distributors (22), and that the outlets of the water distributors (22) are higher than the surface of the water in the net cage.

6. Fish farm construction according to claim 1,
**characterised in that** the water distributor (22) is shaped as, or comprises, a rotary pipe bend, where the outlet of the pipe bend is higher or lower than the surface of the water in the net cage.

7. Fish farm construction according to claim 1,
**characterised in that** the floating collar (10) is a rigid and unsinkable construction and contains a number of closed and separate rooms distributed mutually spaced apart around the whole of the net cage construction.

8. Fish farm construction according to claim 1,**characterised in that** the double wall of the net cage (12) comprises an internal closing seine (40) and a tarpaulin (50)
as external wall, and that an upper part (52) of the tarpaulin (50) constitutes the floating collar (10), as said upper part (52) is folded together and arranged to provide buoyancy, and that the internal closing seine (40) and the external tarpaulin (50) in the bottom section of the net cage have different cone shapes so that a space (42) is formed in between them and that a pipe (44) for the supply of oxygen or air ends up in said space (42), and that the oxygen or air pipe (44) is connected to openings (46) or slits inside the tarpaulin (50) where the channels (48) for the supply of oxygen to said openings are distributed in the tarpaulin (50) in the area of the space (42).

9. Fish farm construction according to claim 1,
**characterised in that** the outlet (30) comprises an outlet bend (30a) equipped with, at least, two outlets (31a,31b), where one outlet (31a) is connected to the outflow pipe (32) and a second outlet (31b) is connected to a second outflow pipe (32a) for the outflow of feed residues and faeces, and that the second outflow pipe (32a) extends up to the outflow platform (34).

10. Fish farm construction according to claim 4,
**characterised in that** the water reservoir (24) in the inlet platform (16) is arranged to function as a water ballast reservoir for ballasting of the floating collar (10).

11. Method for through-flow of water in a fish farm construction for farming of fish, comprising a closed net cage (12) fastened to a floating collar (10) which is, at least, partially submersed in the water, and also an inlet for supply of fresh water to the net cage (12) via, at least, one inlet pipe (14) and an outlet (30) in the lower part of the bottom section of the net cage for free outflow of water and impurities from the net cage via an outflow pipe (32), **characterised in that**
- the fresh water is being received in the floating collar (10) by, at least, one water reservoir (24;80) connected to said, at least, one inlet pipe (14) and is distributed to one or more water distributors (22) placed on the floating collar (10), wherein the water level in said water reservoir (24,80) is kept higher than the water level in the net cage (12), and
- the floating collar (10) comprises a tank (34) connected to the outlet (30), via the outflow pipe (32), where the water level in the tank (34) is being held lower than the water level in the net cage (12),
- whereby the through-flow of the water in the net cage (12) is being regulated by regulating the respective water levels in the water reservoir (24;80) and tank (34).

12. Method according to claim 11,
**characterised in that** the water level in the water reservoir (24) and the tank (34) is regulated with the help of respective valves (28, 38).

13. Method according to claim 11,
**characterised in that** the water level in said water reservoir (24;80) is held higher than the outlets of the water distributors (22) and that the outlets of the water distributors (22) are placed higher than the surface of the water in the net cage (12).

## Patentansprüche

1. Fischfarmkonstruktion zur Aufzucht von Fischen, die ein geschlossenes Netzgehege (12), welches an einer schwimmenden Einfassung (10) befestigt ist, welche sich zumindest teilweise unter Wasser befindet, und außerdem zumindest ein Zuleitungsrohr (14) zum Zuführen von Frischwasser, wobei das Wasser dem Netzgehege (12) mit Hilfe eines oder mehrerer Wasserverteiler zugeführt wird und einem Ablauf (30) in einem unteren Teil des Bodenabschnitts des Netzgeheges zum Ableiten von Wasser und Verschmutzungen aus dem Netzgehege über eine Abführleitung (32) aufweist, **dadurch gekennzeichnet, dass**
- die schwimmende Einfassung aus einer starren Konstruktion gebildet ist, wobei das geschlossene Netzgehege (12) mindestens zwei separate Wände (40, 50) aufweist, und
- die schwimmende Einfassung (10) mindestens einen Wasserbehälter (24; 80), der mit dem mindestens einen Zuleitungsrohr (14) verbunden ist, zum Empfangen von Wasser und außerdem eine Anzahl von Wasserverteilern (22) aufweist, die um die schwimmende Einfassung herum zueinander beabstandet angeordnet sind und die ausgerichtet sind, Wasser in dem Netzgehege (12) zu empfangen und zu verteilen.

2. Fischfarmkonstruktion nach Anspruch 1, **dadurch gekennzeichnet, dass** mindestens ein Wasserkanal (20) mit dem Wasserbehälter (24) verbunden ist und sich vollständig oder teilweise um die schwimmende Einfassung (10) herum erstreckt, wobei der Wasserkanal (20) ausgerichtet ist, das Wasser zu empfangen und das Wasser an jeweilige Wasserverteiler (22), welche an der schwimmenden Einfassung (10) angeordnet sind, zu verteilen und dass der Wasserkanal (20) mit einer Anzahl von Spritzwasserwänden ausgestattet ist, und dass sich der Wasserkanal (20) oder das Wasserrohr von dem Wasserbehälter (24) aus und zu jedem Wasserverteiler (22) erstreckt.

3. Fischfarmkonstruktion nach Anspruch 1, **dadurch gekennzeichnet, dass** die schwimmende Einfassung (10) eine Anzahl an Wasserbehältern in Form von Tanks (80) oder Kammern aufweist, die um die schwimmende Einfassung (10) herum zueinander beabstandet angeordnet sind, wobei jeder Tank (80) ausgerichtet ist, Wasser zu empfangen und das Wasser zu einem oder mehreren Wasserverteilern (22) zu transportieren, oder dass die schwimmende Einfassung (10) eine Anzahl an Wasserbehältern in Form von Tanks (80) oder Kammern aufweist, die um die schwimmende Einfassung (10) herum zueinander beabstandet angeordnet sind, wobei jeder Tank (80) ausgerichtet ist, seinen eigenen Wasserstand zu regulieren, um die schwimmende Einfassung (10) auszugleichen; und weiter **dadurch gekennzeichnet, dass** jeder Tank (80) eine Pumpe zum Zuführen von Wasser zu den Wasserverteilern (22) und/oder zur Regulierung des Wasserstands in dem Tank aufweist.

4. Fischfarmkonstruktion nach Anspruch 1, **dadurch gekennzeichnet, dass** die schwimmende Einfassung (10) eine Zulaufplattform (16) aufweist, wobei ein Wasserbehälter (24) in der Zulaufplattform (16) angeordnet ist, und dass die schwimmende Einfassung (10) eine Ablaufplattform (34) aufweist, die diagonal gegenüberliegend zu der Abführleitung (34) angeordnet und mit dieser verbunden ist und die mit einem Schlammtank (36) ausgestattet ist, um die Verunreinigungen aus dem Netzgehege (12) zu empfangen; und des Weiteren **dadurch gekennzeichnet, dass** die Zulaufplattform (16) eine Pumpe (26) und ein Überlaufventil (28) in dem Wasserbehälter (24) aufweist, wobei das Überlaufventil (28) ausgerichtet ist, den Wasserstand in dem Wasserbehälter und dem Wasserkanal (20) zu regulieren, und/oder dass die Ablaufplattform (34) ein Pegelventil zur Regulierung des Oberflächenniveaus des Wassers in dem Netzgehege (12) aufweist, und dass die Oberfläche des Wassers in dem Schlammtank (36) derart reguliert ist, dass sie niedriger gehalten wird als die Oberfläche des Wassers in dem Netzgehege (12).

5. Fischfarmkonstruktion nach Anspruch 1, **dadurch gekennzeichnet**, das der Wasserstand in dem Wasserbehälter (24) höher ist als die Abläufe der Wasserverteiler (22), und dass die Abläufe der Wasserverteiler (22) höher sind als die Oberfläche des Wassers in dem Netzgehege.

6. Fischfarmkonstruktion nach Anspruch 1, **dadurch gekennzeichnet, dass** der Wasserverteiler (22) als Rundrohrbogen ausgebildet ist oder einen solchen aufweist, wobei der Ablauf des Rohrbogens höher oder niedriger ist als die Oberfläche des Wassers in dem Netzgehege.

7. Fischfarmkonstruktion nach Anspruch 1, **dadurch gekennzeichnet, dass** die schwimmende Einfassung (10) eine starre und unsinkbare Konstruktion ist und eine Anzahl von geschlossenen und separaten Räumen enthält, die um die gesamte Netzgehegekonstruktion herum zueinander beabstandet verteilt sind.

8. Fischfarmkonstruktion nach Anspruch 1, **dadurch gekennzeichnet, dass** die Doppelwand des Netzgeheges (12) ein internes abschließendes Wadennetz (40) und eine Plane (50) als externe Wand aufweist, und dass ein oberer Teil (52) der Plane (50) die schwimmende Einfassung (10) bildet, wobei der obere Teil (52) zusammengefaltet ist und ausgerichtet ist, um für Auftrieb zu sorgen, und dass das interne abschließende Wadennetz (40) und die externe Plane (50) im Bodenabschnitt des Netzgeheges unterschiedliche konische Formen haben, so dass ein Zwischenraum (42) zwischen ihnen gebildet wird und dass eine Leitung (44) für die Zufuhr von Sauerstoff oder Luft in dem Zwischenraum (42) endet, und dass die Sauerstoff- oder Luftleitung (44) mit Öffnungen (46) oder Schlitzen im Inneren der Plane (50) verbunden ist, wobei die Kanäle (48) für die Zufuhr von Sauerstoff zu den Öffnungen in der Plane in dem Bereich des Zwischenraums (42) verteilt sind.

9. Fischfarmkonstruktion nach Anspruch 1, **dadurch gekennzeichnet, dass** der Ablauf (30) eine Ablaufkrümmung (30a) aufweist, die mit mindestens zwei Abläufen (31a, 31b) ausgestattet ist, wobei ein Ablauf (31a) mit der Abführleitung (32) verbunden ist und ein zweiter Ablauf (31b) mit einem zweiten Abführleitung (32a) verbunden ist zum Ableiten von Futterrückständen und Abfallstoffen und dass sich das zweite Ableitungsrohr (32a) zu der Ablaufplattform (34) hinauf erstreckt.

10. Fischfarmkonstruktion nach Anspruch 4, **dadurch gekennzeichnet, dass** der Wasserbehälter (24) in der Zulaufplattform (16) ausgerichtet ist, um als Wasserballastbehälter zum Ausgleichen der schwimmenden Einfassung (10) zu dienen.

11. Verfahren für Durchfluss von Wasser in einer Fischfarmkonstruktion zur Aufzucht von Fischen, welche ein geschlossene Netzgehege (12), das an einer schwimmenden Einfassung (10) befestigt ist, welche sich zumindest teilweise unter Wasser befindet, und außerdem einen Zulauf zum Zuführen von Frischwasser in das Netzgehege (12) über mindestens ein Zuleitungsrohr (14) und einen Ablauf (30) in dem unteren Teil des Bodenbereichs des Netzgeheges für freies Ableiten von Wasser und Verunreinigungen aus dem Netzgehege über eine Abführleitung (32) aufweist, **dadurch gekennzeichnet, dass**
- das Frischwasser in der schwimmenden Einfassung (10) von mindestens einem Wasserbehälter (24; 80), der mit dem mindestens einen Zuleitungsrohr (14) verbunden ist, empfangen wird und an einen oder mehrere Wasserverteiler (22), die auf der schwimmenden Einfassung angeordnet sind, verteilt wird, wobei der Wasserstand in dem Wasserbehälter (24, 80) höher gehalten wird als der Wasserstand in dem Netzgehege (12) und
- die schwimmende Einfassung (10) einen Tank (34) aufweist, der mit dem Ablauf (30) verbunden ist, und zwar über die Abführleitung (32), wobei der Wasserstand in dem Tank (34) niedriger gehalten wird als der Wasserstand in dem Netzgehege (12),
- wobei der Durchfluss des Wassers in dem Netzgehege (12) reguliert wird durch Regulierung der jeweiligen Wasserstände in dem Wasserbehälter (24; 80) und dem Tank (34).

12. Verfahren nach Anspruch 11,
**dadurch gekennzeichnet, dass** der Wasserstand in dem Wasserbehälter (24) und dem Tank (34) reguliert wird mit Hilfe entsprechender Ventile (28, 38).

13. Verfahren nach Anspruch 11,
**dadurch gekennzeichnet, dass** der Wasserstand in dem Wasserbehälter (24; 80) höher gehalten wird als die Abläufe der Wasserverteiler (22) und dass die Abläufe der Wasserverteiler (22) höher angeordnet sind als die Oberfläche des Wassers in dem Netzgehege (12).

## Revendications

1. Construction de pisciculture pour la culture de poissons, comprenant une cage en filet fermée (12) attachée à un collier flottant (10) qui est, au moins, partiellement immergé dans l'eau, et également, au moins, un tuyau d'entrée (14) pour l'alimentation en eau douce, où l'eau est fournie à la cage en filet (12) à l'aide d'un ou de plusieurs distributeurs d'eau, et une sortie (30) dans une partie inférieure de la section basse de la cage en filet pour la sortie d'eau et de déchets à partir de la cage en filet par l'intermédiaire d'un tuyau d'écoulement de sortie (32), **caractérisée en ce que**
- le collier flottant est formé avec une construction rigide, où la cage en filet fermée (12) comprend, au moins, deux parois séparées (40, 50), et
- le collier flottant (10) comprend, au moins, un réservoir d'eau (24 ; 80) raccordé audit, au moins, un tuyau d'entrée (14) pour recevoir de l'eau, et également un nombre de distributeurs d'eau (22) agencés de façon mutuellement séparée les uns des autres autour du collier flottant (10) et qui sont agencés pour recevoir et distribuer de l'eau dans la cage en filet (12).

2. Construction de pisciculture selon la revendication 1, **caractérisée en ce qu'**au moins un canal d'eau (20) est raccordé au réservoir d'eau (24) et s'étend complètement ou partiellement autour du collier flottant (10) car le canal d'eau (20) est agencé pour recevoir l'eau et distribuer l'eau à des distributeurs d'eau respectifs (22) placés sur le collier flottant (10), et que ledit canal d'eau (20) est équipé d'un nombre de cloisons à éclaboussure, et que le canal d'eau (20) ou tuyau d'eau s'étend à partir du réservoir d'eau (24) et jusqu'à chaque distributeur d'eau (22).

3. Construction de pisciculture selon la revendication 1, **caractérisée en ce que** le collier flottant (10) comprend un nombre de réservoirs d'eau sous forme de cuves (80) ou de chambres agencées de façon mutuellement séparée les unes des autres autour du collier flottant (10), où chaque cuve (80) est agencée pour recevoir de l'eau et transporter l'eau jusqu'à un ou plusieurs distributeurs d'eau (22), ou que le collier flottant (10) comprend un nombre de réservoirs d'eau sous forme de cuves (80) ou de chambres agencées de façon mutuellement séparée les unes des autres autour du collier flottant (10), où chaque cuve (80) est agencée pour réguler son propre niveau d'eau pour ballaster le collier flottant (10) ; et **caractérisée en outre en ce que** chaque cuve (80) comprend une pompe pour l'alimentation en eau audit distributeur d'eau (22) et/ou pour la régulation du niveau d'eau dans la cuve.

4. Construction de pisciculture selon la revendication 1, **caractérisée en ce que** le collier flottant (10) comprend une plateforme d'entrée (16), où un réservoir d'eau (24) est agencé dans la plateforme d'entrée (16), et que le collier flottant (10) comprend une plateforme d'écoulement de sortie (34) agencée de façon diagonalement opposée et raccordée au tuyau d'écoulement de sortie (32) et qui est équipée d'une cuve à boues (36) pour recevoir les impuretés de la cage en filet (12) ; et **caractérisée en outre en ce que** la plateforme d'entrée (16) comprend une pompe (26) et une vanne de trop-plein (28) dans le réservoir d'eau (24), dans laquelle la vanne de trop-plein (28) est agencée pour réguler le niveau d'eau dans le réservoir d'eau et le canal d'eau (20), et/ou que la plateforme d'écoulement de sortie (34) comprend une vanne de niveau (38) pour la régulation du niveau de surface de l'eau dans la cage en filet (12), et que la surface de l'eau dans la cuve à boues (36) est agencée pour être maintenue plus basse que la surface de l'eau dans la cage en filet (12).

5. Construction de pisciculture selon la revendication 1, **caractérisée en ce que** le niveau d'eau dans le réservoir d'eau (24) est plus élevé que les sorties des distributeurs d'eau (22), et que les sorties des distributeurs d'eau (22) sont plus élevées que la surface de l'eau dans la cage en filet.

6. Construction de pisciculture selon la revendication 1, **caractérisée en ce que** le distributeur d'eau (22) présente la forme de, ou comprend un, coude de tuyau rotatif, où la sortie du coude de tuyau est plus ou moins élevée que la surface de l'eau dans la cage en filet.

7. Construction de pisciculture selon la revendication 1, **caractérisée en ce que** le collier flottant (10) est une construction rigide et insubmersible et contient un nombre de logements fermés et séparés distribués de façon mutuellement séparée les uns des autres autour de la totalité de construction de la cage en filet.

8. Construction de pisciculture selon la revendication 1, **caractérisée en ce que** la double paroi de la cage en filet (12) comprend une senne de fermeture interne (40) et une bâche (50) en tant que paroi externe, et qu'une partie supérieure (52) de la bâche (50) constitue le collier flottant (10), car ladite partie supérieure (52) est repliée et agencée pour fournir une flottabilité, et que la senne de fermeture interne (40) et la bâche externe (50) dans la section basse de la cage en filet présentent différentes formes coniques pour qu'un espace (42) soit formé entre elles et qu'un tuyau (44) pour l'alimentation en oxygène ou en air se termine dans ledit espace (42), et que le tuyau d'oxygène ou d'air (44) est raccordé à des ouvertures (46) ou des fentes à l'intérieur de la bâche (50) où les canaux (48) pour l'alimentation en oxygène auxdites ouvertures sont distribués dans la bâche (50) dans la zone de l'espace (42).

9. Construction de pisciculture selon la revendication 1, **caractérisée en ce que** la sortie (30) comprend un coude de sortie (30a) équipé de, au moins, deux sorties (31a, 31b), où une sortie (31a) est raccordée au tuyau d'écoulement de sortie (32) et une seconde sortie (31b) est raccordée à un second tuyau d'écoulement de sortie (32a) pour l'écoulement de sortie de résidus d'aliment et de fèces, et que le second tuyau d'écoulement de sortie (32a) s'étend jusqu'à la plateforme d'écoulement de sortie (34).

10. Construction de pisciculture selon la revendication 4, **caractérisée en ce que** le réservoir d'eau (24) dans la plateforme d'entrée (16) est agencé pour servir de réservoir de ballast à eau pour le ballastage du collier flottant (10).

11. Méthode pour l'écoulement d'eau dans une construction de pisciculture pour la culture de poissons, comprenant une cage en filet fermée (12) attachée à un collier flottant (10) qui est, au moins, partiellement immergé dans l'eau, et également une entrée pour l'alimentation en eau douce de la cage en filet (12) par l'intermédiaire de, au moins, un tuyau d'entrée (14) et une sortie (30) dans la partie inférieure de la section basse de la cage en filet pour l'écoulement de sortie libre d'eau et d'impuretés à partir de la cage en filet par l'intermédiaire d'un tuyau d'écoulement de sortie (32), **caractérisée en ce que**
- l'eau douce est reçue dans le collier flottant (10) par, au moins, un réservoir d'eau (24 ; 80) raccordé audit, au moins, un tuyau d'entrée (14) et est distribuée à un ou plusieurs distributeurs d'eau (22) placés sur le collier flottant (10), dans laquelle le niveau d'eau dans ledit réservoir d'eau (24, 80) est maintenu plus élevé que le niveau d'eau dans la cage en filet (12), et
- le collier flottant (10) comprend une cuve (34) raccordée à la sortie (30), par l'intermédiaire du tuyau d'écoulement de sortie (32), où le niveau d'eau dans la cuve (34) est maintenu plus bas que le niveau d'eau dans la cage en filet (12),
- moyennant quoi l'écoulement de l'eau dans la cage en filet (12) est régulé en régulant les niveaux d'eau respectifs dans le réservoir d'eau (24 ; 80) et la cuve (34).

12. Méthode selon la revendication 11, **caractérisée en ce que** le niveau d'eau dans le réservoir d'eau (24) et la cuve (34) est régulé à l'aide de vannes respectives (28, 38).

13. Méthode selon la revendication 11, **caractérisée en ce que** le niveau d'eau dans ledit réservoir d'eau (24 ; 80) est maintenu plus élevé que les sorties des distributeurs d'eau (22) et que les sorties des distributeurs d'eau (22) sont placées de façon plus élevée que la surface de l'eau dans la cage en filet (12).
